# EUROPÄISCHE PATENTSCHRIFT

(11) **EP 1 854 203 B1**
(45) Veröffentlichungstag und Bekanntmachung des Hinweises auf die Patenterteilung: **10.06.2009**
(21) Anmeldenummer: 06707114.2
(22) Anmeldetag: 02.02.2006
(51) Int. Cl.: H02P 7/29

(54) **LÜFTUNGSGERÄT**
VENTILATION APPLIANCE
APPAREIL DE VENTILATION

(30) Priorität: 03.03.2005 DE 102005010984
(43) Veröffentlichungstag der Anmeldung: 14.11.2007
(73) Patentinhaber: E.G.O. ELEKTRO-GERÄTEBAU GmbH, D-75038 Oberderdingen (DE)
(72) Erfinder: FLUHRER, Henry, 75447 Sternenfels (DE)
(74) Vertreter: Patentanwälte Ruff, Wilhelm, Beier, Dauster & Partner
(86) Internationale Anmeldenummer: PCT/EP2006/001536
(87) Internationale Veröffentlichungsnummer: WO 2006/092219

(56) Entgegenhaltungen:
- DE-A1- 4 041 798
- DE-A1- 10 316 641
- US-A- 3 653 318
- US-A- 5 365 154

## Beschreibung

Die Erfindung betrifft eine Dunstabzugshaube gemäß dem Oberbegriff des Anspruchs 1.

Aus dem Stand der Technik sind gestufte Motoransteuerungen bekannt, bei welchen über eine Steuereinheit, welche beispielsweise als Mikrocontrollerschaltung ausgeführt ist, mehrere Relais- oder Triacschaltungen und eine Motoreinheit mit entsprechenden Abgriffen gesteuert werden. Zudem kann der Mikrocontroller gleichzeitig für einen Netzspannungsbetrieb einer stufenlosen Lichtansteuerung mit Phasenanschnittssteuerung oder Phasenabschnittssteuerung verwendet werden, wobei die Ansteuerung über Pulsweitenmodulationssignale realisiert werden kann. Mittels eines nachgeschalteten Transformators, welcher meist extern angeordnet ist, kann aus der Netzspannung eine Niedrigspannung generiert werden, mit welcher eine Halogenlichteinheit betrieben werden kann.

Da die Lichtsteuerung und die Motorsteuerung in der Regel im Halb- bzw. Vollbrückenbetrieb betrieben werden, sollten jeweils mindestens zwei Pulsweitenmodulationssignale für eine getrennte Steuerung einer High-Side-Treiberschaltung und einer Low-Side-Treiberschaltung zur Verfügung gestellt werden. Soll die Signalseite der Steuereinheit die SELF-Anforderungen erfüllen, dann ist zur galvanischen Trennung für jedes der Pulsweitenmodulationssignale eine optische Kopplungsschaltung erforderlich, welche nachfolgend auch als Optokoppler bezeichnet wird. Des weiteren werden aufgrund der hohen Pulsweitenmodulationsfrequenzen entsprechend hohe Anforderungen an die Optokoppler gestellt. Zur galvanischen Trennung der Ansteuersignale sind somit mindestens vier Optokoppler erforderlich, so dass die herkömmliche Anordnung teuer ist.

Die DE 4041798 A1 beschreibt eine Steuerung für eine Dunstabzugshaube. Diese Dunstabzugshaube weist lediglich eine Motorsteuerschaltung auf, um den Lüftermotor zu steuern.

Die US 5,365,154 zeigt eine Ansteuerung für einen Deckenlüfter mit einer Motorsteuerschaltung. Dieser Deckenlüfter weist auch eine Lichtquelle zur Beleuchtung auf.

### Aufgabe und Lösung

Der Erfindung liegt die Aufgabe zugrunde, eine Dunstabzugshaube der eingangs genannten Art mit einer preisgünstigen und zuverlässigen Ansteuerung eines Antriebs und/oder einer Beleuchtung zu schaffen.

Gelöst wird diese Aufgabe durch eine Dunstabzugshaube mit den Merkmalen des Anspruchs 1. Vorteilhafte sowie bevorzugte Ausgestaltungen der Erfindung sind in den weiteren Ansprüchen angegeben und werden nachfolgend näher erläutert. Der Wortlaut der Ansprüchen wird durch ausdrückliche Bezugnahme zum Inhalt der Beschreibung gemacht.

Die Dunstabzugshaube weist einen Antrieb zur Erzeugung eines Luftstroms, eine Beleuchtungsvorrichtung und eine Steuereinheit auf, die zur Steuerung des Antriebs und der Beleuchtungsvorrichtung entsprechende Pulsweitenmodulationssignale erzeugt. Erfindungsgemäß empfängt eine Motorsteuerschaltung über ein galvanisches Trennelement ein erstes Pulsweitenmodulationssignal und erzeugt entsprechende Ansteuersignale für eine Motortreiberschaltung. Zusätzlich empfängt eine Lichtsteuerschattung über ein weiteres galvanisches Trennelement ein zweites Pulsweitenmodulationssignal und erzeugt entsprechende Ansteuersignale für eine Lichttreiberschaltung. Durch die erfindungsgemäße Anordnung der zusätzlichen Motorsteuerschaltung und der zusätzlichen Lichtsteuerschaltung nach der galvanischen Trennung kann in vorteilhafter Weise die Anzahl der galvanischen Trennelemente reduziert werden. Da die zusätzlichen Steuerschaltungen aus preisgünstigen Massenbauteilen aufgebaut werden können, ist der Mehraufwand sehr gering, so dass die Dunstabzugshaube kostengünstig und mit einer zuverlässigen Ansteuerung des Antriebs und der Beleuchtung über entsprechende Pulsweitenmodulationssignale realisiert werden kann. Zudem kann die gesamte Motor- und Lichtsteuerung in vorteilhafter Weise sehr kompakt aufgebaut werden, so dass sich das Bauvolumen gegenüber herkömmlichen Steuerungsschaltungen reduzieren lässt.

In einer Ausgestaltung des Lüftungsgerätes ist die Motortreiberschaltung als Halbbrückenschaltung oder als Vollbrückenschaltung ausgeführt. Sie weist zwei Tiefsetzstellerschaltungen auf, welche über mindestens zwei Steuersignale von der Motorsteuerschaltung angesteuert werden. Dadurch lässt sich die Drehzahl und damit die Leistung des Antriebs in vorteilhafter Weise kontinuierlich einstellen.

In weiterer Ausgestaltung des Lüftungsgerätes ist die Lichtsteuerschaltung ebenfalls als Vollbrückenschaltung oder als Halbbrückenschaltung ausgeführt, so dass die Lichtintensität vorteilhaft kontinuierlich eingestellt werden kann. So wird das zweite Pulsweitenmodulationssignal beispielsweise in ein erstes Ansteuersignal und in ein zweites Ansteuersignal aufgeteilt, welche jeweils die halbe Frequenz des zweiten Pulsweitenmodulationssignals aufweise.

Die Lichtsteuerschaltung weist zur Erzeugung des ersten und des zweiten Ansteuersignals beispielsweise ein D-Flip-Flop und zwei UND-Gatter auf. Da es sich bei den genannten Komponenten um Massenbauteile handelt, kann die Lichtsteuerschaltung in vorteilhafter Weise preisgünstig umgesetzt werden. Das D-Flip-Flop arbeitet als Auswahlschaltung, welche mit jeder ansteigenden Flanke des vom Trennelement kommenden zweiten Pulsweitenmodulationssignals umschaltet, so dass das zweite Pulsweitenmodulationssignal abwechselnd an den Ausgängen der beiden UND-Gatter anliegt. Diese schalten das aufgeteilte Pulsweitenmodulationssignal jeweils zu den entsprechenden Treiberschaltungen durch.

In weiterer Ausgestaltung des Lüftungsgeräts sind die galvanischen Trennelemente für das erste und zweite Pulsweitenmodulationssignal beispielsweise als optische Kopplungsschaltungen ausgeführt. Sie werden auch als Optokoppler bezeichnet. Die Optokoppler isolieren in vorteilhafter Weise einen Niederspannungsbereich von einem Hochspannungsbereich zur Erfüllung der SELF-Anforderungen.

In alternativer Ausgestaltung sind die Motortreiberschaltung und/oder die Lichtsteuerschaltung als Ein-Transistorschaltung ausgeführt. Diese weist einen einzigen Transistor auf, der über ein Steuersignal von der Motorsteuerschaltung ansteuerbar ist. Hier ist der Schaltungsaufwand und Bauteilaufwand sehr gering.

In noch weiterer Ausgestaltung des Lüftungsgerätes sind die Komponenten der Antriebssteuerung und der Lichtsteuerung und die Steuereinheit in einem Gehäuse integriert. Dadurch können die Komponenten, insbesondere bei der Verwendung in einer Dunstabzugshaube, vor Feuchtigkeit und Verschmutzung geschützt werden. Zudem ergibt sich durch die Integration in einem Gehäuse ein sehr kompakter Aufbau, wodurch sich das Bauvolumen gegenüber herkömmlichen Steuerungsschaltungen reduzieren lässt.

In weiterer Ausgestaltung des Lüftungsgerätes wird das Gehäuse als Kühlkörper für die Treiberschaltungen verwendet. Diese Ausführungsform kann insbesondere dann gewählt werden, wenn das Gehäuse als Metallgehäuse ausgeführt ist. Dabei kann das Gehäuse bevorzugt im Luftstrom des Lüftungsgerätes angeordnet werden für eine effektive Kühlung mit möglichst guter bzw. großflächige Anströmung. Je nach Lüfterleistung kann bei dieser Ausführungsform die Kühlfläche relativ gering ausgeführt und somit gesamte Baugröße der Steuerung klein gehalten werden.

In weiterer Ausgestaltung weist das Lüftungsgerät zur Bedienung eine Eingabeeinheit und/oder eine Ausgabeeinheit auf. Über die Eingabeeinheit werden mittels der Steuereinheit die Pulsweitenmodulationssignale zur Motorsteuerung und zur Lichtsteuerung erzeugt. Über die beispielsweise als manuelles Betätigungsmittel, insbesondere auch als Fernbedienung, ausgeführte Eingabeeinheit ist das Pulsbreitenverhältnis der Pulsweitenmodulationssignale einstellbar. Die Ausgabeeinheit kann als optische Ausgabeeinheit in Form eines Displays ausgeführt sein. Sie gibt dem Benutzer eine optische Rückmeldung über die eingestellte Intensität der Beleuchtung bzw. über die Höhe der eingestellten Antriebsleistung der Lüftung.

Zur Erfüllung der SELF-Anforderungen sind die Steuereinheit, die Eingabeeinheit und/oder die Ausgabeeinheit im Niederspannungsbereich und die Motorsteuerschaltung und/oder die Lichtsteuerschaltung in einem Hochspannungsbereich angeordnet. Der Niederspannungsbereich und der Hochspannungsbereich sind galvanisch voneinander getrennt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden nachfolgend näher erläutert. In den Zeichnungen zeigt:
- Fig. 1: ein schematisches Blockdiagramm einer Dunstabzugshaube als Lüftungsgerät,
- Fig. 2: ein schematisches Blockdiagramm einer Lichtsteuerschaltung für die Dunstabzugshaube aus Fig. 1,
- Fig. 3: eine Zeitablaufdiagramm von Eingabe- und Ausgabesignalen der Lichtsteuerschaltung aus Fig. 2 und
- Fig. 4: eine Prinzipskizze, wie ein Gehäuse der Steuerung im Luftstrom der Dunstabzugshaube angeordnet ist.

### Detaillierte Beschreibung der Ausführungsbeispiele

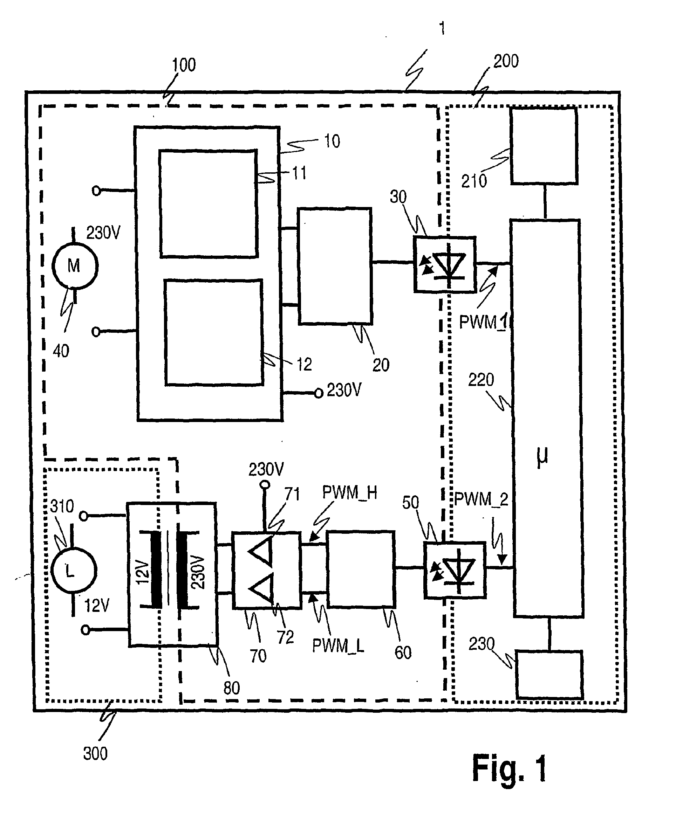

Wie aus Fig. 1 ersichtlich ist, weist eine Dunstabzugshaube 1 einen Hochspannungsbereich 100, einen ersten Niederspannungsbereich 200 und einen zweiten Niederspannungsbereich 300 auf, welche SELF-Bereiche sind. Der Hochspannungsbereich 100 ist über galvanische Trennelemente 30 und 50 bzw. 80 galvanisch vom ersten bzw. zweiten Niederspannungsbereich 200, 300 getrennt. Die galvanischen Trennelemente 30 und 50, welche zwischen dem ersten Niederspannungsbereich 200 und dem Hochspannungsbereich 100 angeordnet sind, sind im dargestellten Ausführungsbeispiel als Optokoppler ausgeführt. Das galvanische Trennelement 80, welches zwischen dem zweiten Niederspannungsbereich 300 und dem Hochspannungsbereich 100 angeordnet ist, ist als Trenntransformator ausgeführt.

Wie weiter aus Fig. 1 ersichtlich ist, weist der erste Niederspannungsbereich 200 eine Eingabeeinheit 210, eine Steuereinheit 220 und eine Ausgabeeinheit 230 auf. Der Hochspannungsbereich 100 weist eine Motorsteuerschaltung 20, eine Motortreiberschaltung 10 mit zwei Tiefsetzstellerschaltungen 11, 12, eine Lichtsteuerschaltung 30 und eine Lichttreiberschaltung auf. Der zweite Niederspannungsbereich weist mindestens eine Niederspannungshalogenlichteinheit 310 auf.

Im dargestellten Ausführungsbeispiel sind die Motortreiberschaltung 10 und die Lichttreiberschaltung als Vollbrückenschaltung ausgeführt. Sie werden jeweils von mindestens zwei Pulweitenmodulationssignalen angesteuert, welche eine getrennte Ansteuerung eines High-Side-Treibers und eines Low-Side-Treibers ermöglichen.

Erfindungsgemäß werden die mindestens zwei Ansteuersignale für die Ansteuerung der Motortreiberschaltung 10 von der im Hochspannungsbereich 100 angeordneten Motorsteuerschaltung 20 erzeugt. Ein Ansteuersignal steuert die erste Tiefsetzstellerschaltung 11 bzw. den High-Side-Treiber an und ein weiteres Ansteuersignal steuert die zweite Tiefsetzstellerschaltung 12 bzw. den Low-Side-Treiber an. Die Motorsteuerschaltung 20 erzeugt aus einem ersten Pulsweitenmodulationssignal PWM_1, welches von der Steuereinheit 220 über den Optokoppler 30 bereitgestellt wird, die mindestens zwei komplementären Pulsweitenmodulationssignale zur Ansteuerung der Motortreiberschaltung 10. Die Leistungsausgänge der Motortreiberschaltung 10 stellen die Ansteuersignale mit 230 V für den Antrieb 40 zur Verfügung. Das Pulsbreitenverhältnis des ersten Pulsweitenmodulationssignals PWM_1 wird je nach Motorleistungsbedarf vom Benutzer bei der Bedienung über die Eingabeeinheit 210 und die Ausgabeeinheit 230 eingestellt.

Im dargestellten Ausführungsbeispiel gibt die Steuereinheit 220 zur Lichtsteuerung ein zweites Pulsweitenmodulationssignal PWM_2 über den Optokoppler 50 an die Lichtsteuerschaltung 60 aus. Diese teilt das zweite Pulsweitenmodulationssignal PWM_2 in ein erstes Ansteuersignal PWM_H mit der halben Frequenz des zweiten Pulsweitenmodulationssignals PWM_2 und in ein zweites Ansteuersignal PWM_L mit der halben Frequenz des zweiten Pulsweitenmodulationssignal PWM_2 auf. Das erste Ansteuersignal PWM_H steuert einen High-Side-Treiber 71 und das zweite Ansteuersignal PWM_L steuert einen Low-Side-Treiber 72 innerhalb der Lichttreiberschaltung 70 an. Die Leistungsausgänge der Lichttreiberschaltung 70 betreiben einen Trenntransformator 80, welcher die Ansteuersignale mit 230V in Ansteuersignale mit 12V zur Ansteuerung der mindestens einen Niederspannungshalogenlichteinheit 310 umwandelt. Das Pulsbreitenverhältnis des zweiten Pulsweitenmodulationssignals PWM_2 wird je nach Lichtleistungsbedarf vom Benutzer bei der Bedienung über die Eingabeeinheit 210 und die Ausgabeeinheit 230 eingestellt. Die Optokoppler 30 und 50 isolieren den für die Bedienung erforderlichen ersten Niederspannungsbereich 200 vom Hochspannungsbereich 100. Dessen Treiberschaltungen 10 und 70 werden mit einer Spannung von 230 V betrieben.

Bei einem alternativen, nicht dargestellten Ausführungsbeispiel können nur die Ansteuersignale für die Motortreiberschaltung 10 über die Motorsteuerschaltung 20 erzeugt werden. Die Ansteuersignale für die Lichttreiberschaltung 70 werden dabei direkt von der Steuereinheit 220 erzeugt und über entsprechende Optokoppler direkt an die Lichttreiberschaltung 70 übertragen.

Bei einem weiteren alternativen, nicht dargestellten Ausführungsbeispiel können nur die Ansteuersignale für die Lichttreiberschaltung 70 über die Lichtsteuerschaltung 60 erzeugt werden. Die Ansteuersignale für die Motortreiberschaltung 10 werden direkt von der Steuereinheit 220 erzeugt und über entsprechende Optokoppler direkt an die Motortreiberschaltung 10 übertragen.

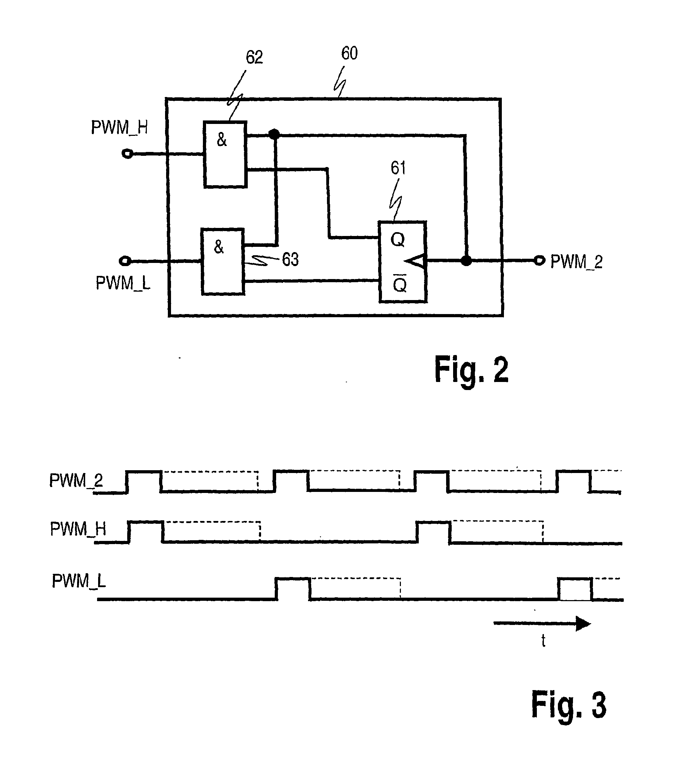

Wie aus Fig. 2 ersichtlich ist, weist die Lichtsteuerschaltung 60 ein D-Flip-Flop 61 auf, welches als Auswahlschaltung betrieben wird, und zwei UND-Gatter 62, 63. Das zweite Pulsweitenmodulationssignal PWM_2 wird über das erste UND-Gatter 62 als erstes Ansteuersignal PWM_H an den High-Side-Treiber 71 durchgeschaltet und über das zweite UND-Gatter 63 als zweites Ansteuersignal PWM_L an den Low-Side-Treiber 72 durchgeschaltet. Mit jeder ansteigenden Flanke des vom Optokoppler 50 übertragenen zweiten Pulsweitenmodulationssignals PWM_2 wird, wie aus Fig. 3 ersichtlich ist, zwischen den beiden Ausgängen Q und Q umgeschaltet. So liegt das zweite Pulsweitenmodulationssignal PWM_2 abwechselnd als erstes Ansteuersignal PWM_H am Ausgang des ersten UND-Gatters 62 oder als zweites Ansteuersignal PWM_L am Ausgang des zweiten UND-Gatters 63 an. Die in Fig. 3 gestrichelt dargestellten Impulse stellen die maximal einstellbare Impulsdauer dar.

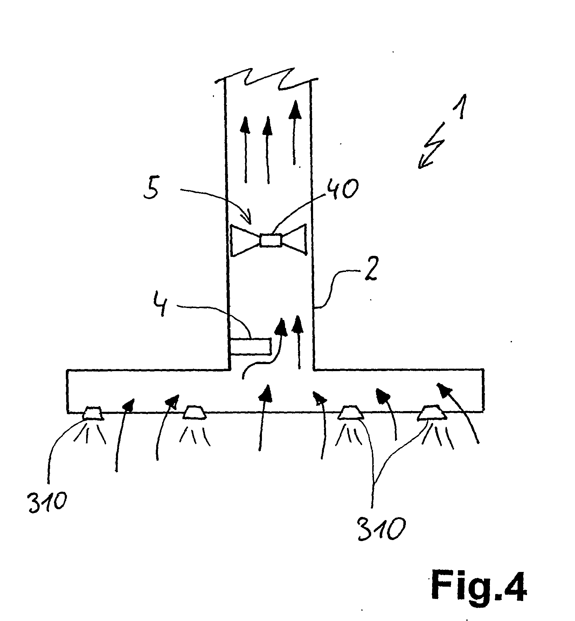

In Fig. 4 ist dargestellt, wie im Abluftkanal 2 der erfindungsgemäßen Dunstabzugshaube 1 ein Gehäuse 4 angeordnet ist, vorteilhaft als Metallgehäuse. Oberhalb des Gehäuses 4 befindet sich ein Lüfter 5, welcher Luft von unten in die Dunstabzugshaube 1 einsaugt und nach oben zu einem nicht dargestellten Auslass ausbläst. Es ist zu erkennen, wie im Abluftkanal 2 die angesaugte Luft an dem Gehäuse 4 relativ großflächig vorbei- und entlang streicht. Wenn die verschiedenen, zu kühlenden Bauteile nach Fig. 1 entsprechend an den Gehäusewandungen angeordnet sind, können sie durch diesen Abluftstrom gekühlt werden.

Des weiteren sind mehrere Halogenlampen 310 an der Unterseite der Dunstabzugshaube 1 dargestellt. Diese beleuchten einen Arbeitsplatz unter der Dunstabzugshaube 1, insbesondere ein Kochfeld.

In der dargestellten Dunstabzugshaube 1 sind sowohl die Komponenten der Antriebssteuerung, d.h. die Motorsteuerschaltung 20, die Motortreiberschaltung 10, der Optokoppler 30, als auch die Komponenten der Lichtsteuerung, d.h. die Lichtsteuerschaltung 60, die Lichttreiberschaltung 70, der Trenntransformator 80 und der Optokoppler 50, und die Steuereinheit 220 in dem Gehäuse 4 integriert. Dieses kann in der Dunstabzugshaube im Luftstrom angeordnet sein. Dadurch ist eine kompakte Ausführung der Steuerelektronik für das Lüftungsgerät möglich. Am Gehäuse sind nur entsprechende Schnittstellen zur Eingabeeinheit 210, zur Ausgabeeinheit 230, zum Antrieb 40 und/oder zu der mindestens einen Halogenlampe 310 vorhanden. Zudem wird das Gehäuse von der Motortreiberschaltung 10 und von der Lichttreiberschaltung 70 zusätzlich als Kühlkörper verwendet.

Das erfindungsgemäße Lüftungsgerät ermöglicht eine kostengünstige Umsetzung einer Dunstabzugshaube mit einer modularen Steuerelektronik, mit der sowohl ein netzspannungsbetriebener Lüftermotor als auch eine Niederspannungshalogenlichteinheit für einen Sicherheitskleinspannungsbetrieb unabhängig voneinander und stufenlos betrieben werden können.

## Patentansprüche

1. Dunstabzugshaube (1) mit einem Antrieb (40) zur Erzeugung eines Luftstroms, einer Beleuchtungsvorrichtung (310) und einer Steuereinheit (220), welche zur Steuerung des Antriebs (40) und der Beleuchtungsvorrichtung (310) entsprechende Pulsweitenmodulationssignale (PWM_1, PWM_2) erzeugt, wobei,
- eine Motorsteuerschaltung (20) für den Antrieb (40) zur Erzeugung entsprechender Ansteuersignale für eine Motortreiberschaltung (10) über ein galvanisches Trennelement (30), wobei die Motorsteuerschaltung ein erstes Pulsweitenmodulationssignal (PWM_1) empfängt, und
- eine Lichtsteuerschaltung (60) für die Beleuchtungsvorrichtung (310) zur Erzeugung entsprechender Ansteuersignale (PWM_H, PWM_L) für eine Lichttreiberschaltung (70) über ein weiteres galvanisches Trennelement (50), wobei die Lichtsteuerschaltung ein zweites Pulsweitenmodulationssignal (PWM_2) empfängt.

2. Dunstabzugshaube nach Anspruch 1, **dadurch gekennzeichnet, dass** die Motortreiberschaltung (10) als Vollbrückenschaltung oder als Halbbrückenschaltung ausgeführt ist und zwei Tiefsetzstellerschaltungen (11, 12) aufweist, welche über mindestens zwei Steuersignale von der Motorsteuerschaltung (20) ansteuerbar sind.

3. Dunstabzugshaube nach Anspruch 1 oder 2, **dadurch gekennzeichnet, dass** die Lichtsteuerschaltung (60) als Vollbrückenschaltung oder als Halbbrückenschaltung ausgeführt ist und zur Aufteilung des zweiten Pulsweitenmodulationssignals (PWM_2) in ein erstes Ansteuersignal (PWM_H) und in ein zweites Ansteuersignal (PWM_L) ausgebildet ist, wobei die Ansteuersignale jeweils die halbe Frequenz des zweiten Pulsweitenmodulationssignals (PWM_2) aufweisen.

4. Dunstabzugshaube nach Anspruch 3, **dadurch gekennzeichnet, dass** die Lichtsteuerschaltung (60) zur Erzeugung des ersten und zweiten Ansteuersignals (PWM_H, PWM_L) ein D-Flip-Flop (61) und zwei UND-Gatter (62, 63) aufweist.

5. Dunstabzugshaube nach einem der vorstehenden Ansprüche, **dadurch gekennzeichnet, dass** die galvanischen Trennelemente (30, 50) für das erste und zweite Pulsweitenmodulationssignal (PWM_1, PWM_2) als optische Kopplungsschaltungen ausgeführt sind, insbesondere als Optokoppler.

6. Dunstabzugshaube nach Anspruch 1, **dadurch gekennzeichnet, dass** die Motortreiberschaltung und/oder die Lichtsteuerschaltung als Ein-Transistorschaltung ausgeführt ist und einen einzigen Transistor aufweist, der über ein Steuersignal von der Motorsteuerschaltung ansteuerbar ist.

7. Dunstabzugshaube nach einem der vorstehenden Ansprüche, **dadurch gekennzeichnet, dass** die Komponenten der Antriebssteuerung (10, 20) und der Lichtsteuerung (60, 70, 80) und die Steuereinheit (220) in einem Gehäuse integriert sind, wobei vorzugsweise das Gehäuse ein Kühlkörper für die Treiberschaltungen (10, 70) ist.

8. Dunstabzugshaube nach Anspruch 7, **dadurch gekennzeichnet, dass** das Gehäuse im Luftstrom der Dunstabzugshaube (1) angeordnet ist, wobei es vorzugsweise großflächig von Luft angeströmt wird.

9. Dunstabzugshaube nach einem der vorstehenden Ansprüche, **gekennzeichnet durch** eine Eingabeeinheit (210) und/oder eine Ausgabeeinheit (230) zur Bedienung der Dunstabzugshaube (1).

10. Dunstabzugshaube nach einem der vorstehenden Ansprüche, **dadurch gekennzeichnet, dass** die Steuereinheit (220), die Eingabeeinheit (210) und/oder die Ausgabeeinheit (230) in einem Niederspannungsbereich (200) und die Motorsteuerschaltung (20) und die Lichtsteuerschaltung (60) in einen Hochspannungsbereich (100) angeordnet sind, wobei insbesondere der Niederspannungsbereich (200) und der Hochspannungsbereich (100) galvanisch voneinander getrennt sind.

## Claims

1. An extractor hood (1) having a drive (40) for generating an air current, a lighting device (310) and a control unit (220), which generates corresponding pulse width modulation signals (PWM_1, PWM_2) for controlling the drive (40) and the lighting device (310),
- wherein a motor control circuit (20) is provided for the drive (40) for generating corresponding trigger signals for a motor driver circuit (10) via an electrical isolation element (30), the motor control circuit receiving a first pulse width modulation signal (PWM_1), and
- a light control circuit (60) is provided for the lighting device (310) for generating corresponding trigger signals (PWM_H, PWM_L) for a light driver circuit (70) via a further electrical isolation element (50), the light control circuit receiving a second pulse width modulation signal (PWM_2).

2. The extractor hood according to claim 1, **characterised in that** the motor driver circuit (10) takes the form of a full-bridge circuit or a half-bridge circuit and comprises two buck converter circuits (11, 12), which are triggerable by means of at least two control signals from the motor control circuit (20).

3. The extractor hood according to claim 1 or claim 2, **characterised in that** the light control circuit (60) takes the form of a full-bridge circuit or a half-bridge circuit and is designed to split the second pulse width modulation signal (PWM_2) into a first trigger signal (PWM_H) and into a second trigger signal (PWM_L), the trigger signals each having half the frequency of the second pulse width modulation signal (PWM_2).

4. The extractor hood according to claim 3, **characterised in that** the light control circuit (60) comprises a D flip-flop (61) and two AND gates (62, 63) for generating the first and second trigger signals (PWM_H, PWM_L).

5. The extractor hood according to any one of the preceding claims, **characterised in that** the electrical isolation elements (30, 50) for the first and second pulse width modulation signals (PWM_1, PWM_2) take the form of optical coupling circuits, in particular of optocouplers.

6. The extractor hood according to claim 1, **characterised in that** the motor driver circuit and/or the light control circuit take(s) the form of a one-transistor circuit and comprises a single transistor, which is triggerable by means of a control signal from the motor control circuit.

7. The extractor hood according to any one of the preceding claims, **characterised in that** the components of the drive control system (10, 20) and of the light control system (60, 70, 80) and the control unit (220) are incorporated in one housing, the housing preferably being a heat sink for the driver circuits (10, 70).

8. The extractor hood according to claim 7, **characterised in that** the housing is arranged in the air current of the extractor hood (1), air preferably flowing over a large area thereof.

9. The extractor hood according to any one of the preceding claims, **characterised by** an input unit (210) and/or an output unit (230) for operating the extractor hood (1).

10. The extractor hood according to any one of the preceding claims, **characterised in that** the control unit (220), the input unit (210) and/or the output unit (230) are arranged in a low voltage zone (200) and the motor control circuit (20) and the light control circuit (60) are arranged in a high voltage zone (100), the low voltage zone (200) and the high voltage zone (100) in particular being electrically isolated from one another.

## Revendications

1. Hotte aspirante (1) avec un actionnement (40) pour la génération d'un courant d'air, un dispositif d'illumination (310) et une unité de commande (220) qui produit des signaux à modulation d'impulsions en largeur ou signaux MLI (PWM_1, PWM_2) correspondants pour la commande de l'actionnement (40) et du dispositif d'illumination (310), sachant que
- un circuit de commande de moteur (20) pour l'actionnement (40) est prévu pour générer des signaux d'attaque correspondants pour un circuit d'attaque pour moteur (10) au moyen d'un élément d'isolation électrique (30), sachant que le circuit de commande de moteur reçoit un premier signal à modulation d'impulsions en largeur (PWM_1) et que
- un circuit de commande de lumière (60) pour le dispositif d'illumination (310) est prévu pour générer des signaux d'attaque (PWM_H, PWM_L) correspondants pour un circuit d'attaque pour lumière (70) au moyen d'un autre élément d'isolation électrique (50), sachant que le circuit de commande de lumière reçoit un deuxième signal à modulation d'impulsions en largeur (PWM_2).

2. Hotte aspirante d'après la revendication 1, **caractérisée en ce que** le circuit d'attaque pour moteur (10) est réalisé comme circuit à pont intégral ou bien comme circuit à demi-pont et qu'il présente deux circuits convertisseurs Buck (11, 12) pouvant être commandés par au moins deux signaux de commande du circuit de commande de moteur (20).

3. Hotte aspirante d'après la revendication 1 ou 2, **caractérisée en ce que** le circuit de commande de lumière (60) est réalisé comme circuit à pont intégral ou bien comme circuit à demi-pont et qu'il est réalisé de manière à permettre la subdivision du deuxième signal à modulation d'impulsions en largeur (PWM_2) en un premier signal d'attaque (PWM_H) et en un deuxième signal d'attaque (PWM_L), sachant que les signaux d'attaque présentent respectivement la moitié de la fréquence du deuxième signal à modulation d'impulsions en largeur (PWM_2).

4. Hotte aspirante d'après la revendication 3, **caractérisée en ce que** le circuit de commande de lumière (60) présente une bascule D (61) et deux fonctions ET (62, 63) pour la génération du premier et du deuxième signal d'attaque (PWM_H, PWM_L).

5. Hotte aspirante d'après une des revendications précédentes, **caractérisée en ce que** les éléments d'isolation électrique (30, 50) pour le premier et le deuxième signal à modulation d'impulsions en largeur (PWM_1, PWM_2) sont réalisés comme circuits de couplage optique, notamment comme photocoupleur.

6. Hotte aspirante d'après la revendication 1, **caractérisée en ce que** le circuit d'attaque pour moteur et/ou le circuit de commande de lumière est réalisé comme circuit à transistor unique et qu'il présente un seul transistor qui peut être commandé par un signal de commande du circuit de commande de moteur.

7. Hotte aspirante d'après une des revendications précédentes, **caractérisée en ce que** les composants de la commande d'actionnement (10, 20) et de la commande de lumière (60, 70, 80) et l'unité de commande (220) sont intégrés dans un boîtier, sachant que de préférence le boîtier est un dissipateur thermique pour les circuits d'attaque (10, 70).

8. Hotte aspirante d'après la revendication 7, **caractérisée en ce que** le boîtier est disposé dans le courant d'air de la hotte aspirante (1), sachant que l'air du soufflage s'écoule de préférence à grande surface autour de lui.

9. Hotte aspirante d'après une des revendications précédentes, **caractérisée par** une unité d'entrée (210) et/ou une unité de sortie (230) pour la commande de la hotte aspirante (1).

10. Hotte aspirante d'après une des revendications précédentes, **caractérisée en ce que** l'unité de commande (220), l'unité d'entrée (210) et/ou l'unité de sortie (230) sont disposés dans un champ à basse tension (200) et que le circuit de commande de moteur (20) et le circuit de commande de lumière (60) sont disposés dans un champ à haute tension (100), sachant que notamment le champ à basse tension (200) et le champ à haute tension (100) sont électriquement isolés l'un de l'autre.
